(19) Europäisches Patentamt / European Patent Office / Office européen des brevets

(11) **EP 1 760 361 A1**

(12) **EUROPEAN PATENT APPLICATION**
published in accordance with Art. 158(3) EPC

(43) Date of publication:
**07.03.2007 Bulletin 2007/10**

(51) Int Cl.:
*F16G 5/18* (2006.01)     *F16H 9/24* (2006.01)

(21) Application number: **05739326.6**

(86) International application number:
**PCT/JP2005/008618**

(22) Date of filing: **11.05.2005**

(87) International publication number:
**WO 2005/108819 (17.11.2005 Gazette 2005/46)**

(84) Designated Contracting States:
**DE FR GB IT**

(30) Priority: **11.05.2004 JP 2004140877**

(71) Applicant: **JTEKT CORPORATION**
**Chuo-ku**
**Osaka-shi**
**Osaka 542-8502 (JP)**

(72) Inventors:
• **YASUHARA, Shinji**
**6391054 (JP)**

• **KAMAMOTO, Shigeo**
**5820024 (JP)**
• **FUKUI, Nobuki**
**6391054 (JP)**

(74) Representative: **Sajda, Wolf E. et al**
**Meissner, Bolte & Partner**
**Anwaltssozietät GbR**
**Postfach 86 06 24**
**D-81633 München (DE)**

(54) **POWER TRANSMISSION CHAIN AND POWER TRANSMISSION DEVICE USING THE SAME**

(57) A power transmission chain used in a power transmission device of the present invention includes: a plurality of link plates having through holes; and a plurality of pin members that are inserted through the through holes and connect the plurality of link plates to one another. An amount of skew in a chain width direction per chain length of 200 mm is 1 to 2 mm in the power transmission chain. Thus, even if misalignment occurs in the power transmission chain, occurrence of abnormal wear and reduction in transmission efficiency can be effectively prevented.

*FIG. 8*

EP 1 760 361 A1

**Description**

Technical Field

The present invention relates to a power transmission chain used in a chain-type continuously variable transmission or the like for a vehicle, and a power transmission device using the same.

Background Art

A continuously variable transmission (CVT) for an automobile includes, for example, a primary pulley provided in an engine side, a secondary pulley provided in drive wheels side, and an endless power transmission chain having a plurality of link plates and a plurality of pins that connect the link plates to one another, and spanning between the pulleys. In such a so-called chain-type continuously variable transmission, a sheave surface of conical shape of each pulley and part of a chain component such as a pin end surface of the power transmission chain comes into contact with each other, and a friction force generated at this time generates traction to transmit power.

Then, a groove width (a distance between sheave surfaces) of at least one of the primary pulley and the secondary pulley is continuously changed to continuously change an effective radius of the pulley. This causes a speed reducing ratio to be continuously changed, and allows stepless speed change to be performed with smooth movement unlike a conventional gear-type transmission.

A power transmission chain used in such a chain-type continuously variable transmission is connected by placing a plurality of link plates on one another and press fitting or inserting with play a pin into through holes of the link plates as described in, for example, Japanese Utility Model Laid-Open No. 64-27558.

In such a chain-type continuously variable transmission, a groove width of at least one of a primary pulley and a secondary pulley is continuously changed to allow speed change therebetween. A pulley used in such a chain continuously variable transmission generally has two sheave surfaces placed to face each other, and is configured so that one sheave surface is secured with respect to a pulley axis direction and the other sheave surface is moved in the pulley axis direction to change a groove width formed between the sheave surfaces.

Then, when the other sheave surface is moved to change the groove width, a center position of the groove width is also moved because one sheave surface is secured. At this time, centers in the groove widths of both the pulleys are displaced to cause misalignment. Such misalignment inevitably occurs in terms of mechanism of such a transmission.

With such misalignment, the power transmission chain as described above is bendable in a direction of winding circumferentially of each pulley (hereinafter also referred to as circumferential bending), but is nearly immovable in other directions, thus the chain is wound around both the pulleys and subjected to an excessive force, which sometimes prevents a contact surface between the sheave surfaces of the pulleys and the chain from being properly maintained.

If power transmission is performed for a long period in such a state, abnormal wear may occur in the sheave surfaces of the pulleys or a contact surface on the side of the chain, or power transmission efficiency may be reduced.

In order to accept such misalignment, it can be considered to take a measure to provide flexibility to the chain. On the other hand, when higher flexibility is provided than that can accept the above described misalignment that inevitably occurs in terms of mechanism, the contact surface between the pulleys and the chain may become unstable to cause abnormal wear.

The present invention is achieved in view of such circumstances, and has an object to provide a power transmission chain that suitably accepts misalignment between pulleys, and can effectively prevent occurrence of abnormal wear and reduction in power transmission efficiency, and a power transmission device using the same.

Disclosure of the Invention

The present invention provides a power transmission chain including, as chain components: a plurality of link plates having through holes; and a plurality of pin members that are inserted through the through holes and connect the plurality of link plates to one another, the chain spanning a first pulley having a sheave surface of conical shape and a second pulley having a sheave surface of conical shape, and the chain components and the sheave surfaces of the first and second pulleys coming into contact with each other to transmit power, wherein an amount of skew in a chain width direction per chain length of 200 mm is 1 to 2 mm.

According to the power transmission chain configured as described above, the amount of skew that indicates a degree of flexibility in the chain width direction is set in a proper range, and thus flexibility enough to accept misalignment that inevitably occurs in terms of mechanism between the first pulley and the second pulley can be obtained, and contact surfaces between the sheave surfaces of the pulleys and the chain components can be properly maintained. This effectively prevents occurrence of abnormal wear and reduction in power transmission efficiency.

When the amount of skew is 1 mm or less, the above described misalignment that occurs in terms of mechanism cannot be accepted, and thus abnormal wear and reduction in transmission efficiency may not be prevented. When the amount of skew is 2 mm or more, flexibility of the power transmission chain is too high, which may cause a flutter of the chain and increase noise or vibration. Also, the contact between the sheave surfaces and the power transmission chain becomes unstable, which may cause abnormal wear.

If the amount of skew is at a predetermined value in the power transmission chain, the pin member may be inserted through the through hole by press fitting, and also in this case, occurrence of abnormal wear and reduction in power transmission efficiency can be effectively prevented.

Further, in the power transmission chain, an end of an inner peripheral surface of the through hole is preferably chamfered. In this case, a degree of freedom is provided to an angle formed between a length direction of the pin member and a hole axis direction of the through hole, thereby providing flexibility in bending in directions other than a circumferential direction. This accepts the misalignment and allows contact surfaces between the sheave surfaces of the pulleys and the chain components to be properly maintained, thereby effectively preventing abnormal wear and reduction in transmission efficiency.

In the power transmission chain, when the pin member includes a first pin inserted through the through hole, and a second pin inserted through the through hole and having one side surface in contact with one side surface of the pin, a crowning in the chain width direction is preferably provided in at least one of one side surface of the first pin and one side surface of the second pin.

According to the above described configuration, the crowning (a convex curved surface) in the chain width direction provides a degree of freedom to a contact angle between the first pin and the second pin, thereby providing the chain with flexibility in bending other than circumferential bending.

In the power transmission chain, when the pin member includes the first pin inserted through the through hole, and the second pin inserted through the through hole and having one side surface in contact with one side surface of the first pin, a gap is preferably provided at least one of between an inner peripheral surface of the through hole of the link plate and the other side surface of the first pin and between an inner peripheral surface of a through hole of the link plate and the other side surface of the second pin.

According to the above described configuration, the gap provides a degree of freedom to an angle formed between a length direction of the first pin or the second pin and the hole axial direction of the through hole, thereby providing a chain with flexibility in bending other than circumferential bending.

When the above described power transmission chain includes the plurality of link plates arranged with the same phase in a chain length direction and placed on one another in the width direction, the pin members inserted through the plurality of link plates, and a plurality of pitch portions continuously connected in the chain length direction, at least one of the plurality of pitch portions is preferably a centrally dense pitch portion where the plurality of link plates are densely arranged in a range around a center in the chain width direction.

According to the above described configuration, in the centrally dense pitch portion, the link plates arranged closer to right and left ends where bending other than circumferential bending is relatively strongly restrained are coarsely arranged with wide spaces between adjacent link plates as compared with the link plates around the center in the chain width direction. Thus, a restraining force of the bending other than circumferential bending of the centrally dense pitch portion is reduced to provide flexibility in the bending. At least one centrally dense pitch portion provided with the flexibility is placed in a chain circumferential direction to provide flexibility to the entire chain.

When the power transmission chain includes the plurality of link plates arranged with the same phase in the chain length direction and placed on one another in the width direction, the pin members inserted through the plurality of link plates, and a plurality of pitch portions continuously connected in the chain length direction, at least one of the plurality of pitch portions is preferably a centrally concentrated pitch portion where all the link plates that constitute the pitch portion are concentrated in a range around the center in the chain width direction and narrower than the entire chain width.

According to the above described configuration, all the link plates that constitute the centrally concentrated pitch portion are arranged in the range narrower than the entire chain width in the centrally concentrated pitch portion, and thus there is no link plate closer to right and left ends where bending other than circumferential bending is restrained. Thus, the centrally concentrated pitch portion has flexibility in bending other than circumferential bending. Then, at least one centrally concentrated pitch portion provided with the flexibility is placed in the chain circumferential direction to provide flexibility to the entire chain.

The present invention also provides a power transmission device including: a first pulley having a sheave surface of conical shape; a second pulley having a sheave surface of conical shape; and a power transmission chain spanning the first and second pulleys; chain components of the power transmission chain and the sheave surfaces of the first and second pulleys coming into contact with each other to transmit power, wherein the power transmission chain is the chain as described above.

According to the power transmission device thus configured, even if misalignment that inevitably occurs in terms of mechanism occurs between the first pulley and the second pulley, the flexibility of the power transmission chain described above can suitably accept the misalignment. This allows contact surfaces between the sheave surfaces of the pulleys and the chain components to be properly maintained, thereby effectively preventing abnormal wear and reduction in transmission efficiency.

Brief Description of the Drawings

FIG. 1    is a schematic perspective view of a configuration of essential portions of a power transmission chain according to a first embodiment of the present invention;

FIG. 2    is a circumferential sectional view of part of the power transmission chain in FIG. 1;

FIG. 3    is a top view of an example of arrangement of link plates in the power transmission chain in FIG. 1;

FIG. 4    is a sectional view of the chain taken along the line B-B in FIG. 2;

FIG. 5    is a schematic diagram showing another shape of a link plate at an end of an inner peripheral surface of a through hole;

FIG. 6    is a schematic diagram showing a further shape of a link plate at an end of an inner peripheral surface of a through hole;

FIG. 7    is a schematic diagram showing a further shape of a link plate at an end of an inner peripheral surface of a through hole;

FIG. 8    is a top view for illustrating an amount of skew of the power transmission chain;

FIG. 9    is a schematic perspective view of a configuration of essential portions of a chain-type continuously variable transmission according to an embodiment of a power transmission device of the present invention;

FIG. 10   is a side view for illustrating a geometric relationship between a primary pulley, a secondary pulley, and a chain in the continuously variable transmission in FIG. 9;

FIG. 11   is a sectional view for illustrating the geometric relationship between the primary pulley, the secondary pulley, and the chain in the continuously variable transmission in FIG. 9;

FIG. 12   is an axial sectional view of a pin and a strip when a chain according to a second embodiment of a power transmission chain of the present invention is seen from above;

FIG. 13   is a circumferential sectional view of part of a chain according to a third embodiment of a power transmission chain of the present invention;

FIG. 14   is a sectional view in a chain width direction taken along the line F-F in FIG. 13;

FIG. 15   is a top view of an example of arrangement of link plates of a chain according to a fourth embodiment of a power transmission chain of the present invention;

FIG. 16   schematically shows a state of placement of a centrally dense pitch portion in the entire chain;

FIG. 17   is a schematic diagram showing an example of a variation of arrangement of link plates in the entire chain width of one pitch portion;

FIG. 18   is a schematic diagram showing another example of a variation of arrangement of the link plates in the entire chain width of one pitch portion;

FIG. 19   is a schematic diagram showing a further example of a variation of arrangement of the link plates in the entire chain width of one pitch portion;

FIG. 20   is a schematic diagram showing a further example of a variation of arrangement of the link plates in the entire chain width of one pitch portion;

FIG. 21   is a top view of an example of arrangement of link plates of a chain according to a fifth embodiment of a power transmission chain of the present invention;

FIG. 22   shows an example of a link plate formed with a communication portion that provides communication between a first through hole and a second through hole; and

FIG. 23   shows another example of a link plate formed with a communication portion that provides communication between the first through hole and the second through hole.

Best Mode for Carrying out the Invention

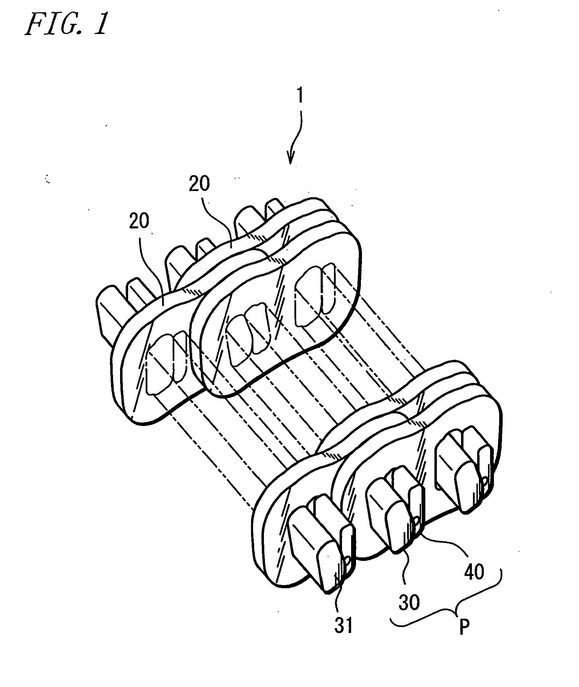

Next, preferred embodiments of the present invention will be described with reference to the accompanying drawings. FIG. 1 is a schematic perspective view of a configuration of essential portions of a chain for a chain-type continuously variable transmission (hereinafter also simply referred to as "chain") according to a first embodiment of a power transmission chain of the present invention. In the figure, the chain 1 of the embodiment is endless, and includes, as chain components, a plurality of link plates 20 made of metal (such as carbon steel), and a plurality of pin members **P** made of metal (such as bearing steel) for connecting the link plates 20 to one another. In FIG. 1, a center portion in a width direction of the chain 1 is partly omitted.

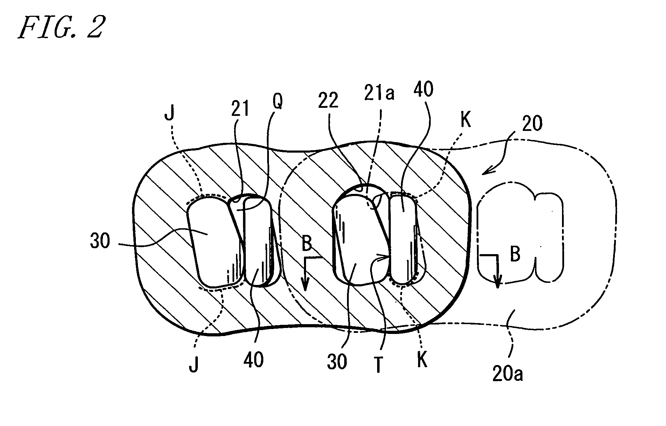

FIG. 2 is a circumferential sectional view of part of the chain 1. The link plates 20 each have a contour line of gentle curved shape, and are formed to have substantially the same contours. Each link plate 20 has a first through hole 21 and a second through hole 22. Also referring to FIG. 1, the pin members **P** connecting the link plates 20 each include a pin 30 as a first pin of rod shape having a section of predetermined shape, and a strip 40 as a second pin of rod shape formed to be slightly shorter than the pin 30 and having a section of predetermined shape. A plurality of pins 30 and a plurality of strips 40 that constitute the plurality of pin members **P** all have substantially the same shape.

A pin end surface 31 of the pin 30 has a convex curved surface set to have a predetermined curvature, and comes into contact with a sheave surface of a pulley of a chain-type continuously variable transmission (not shown) to transmit power.

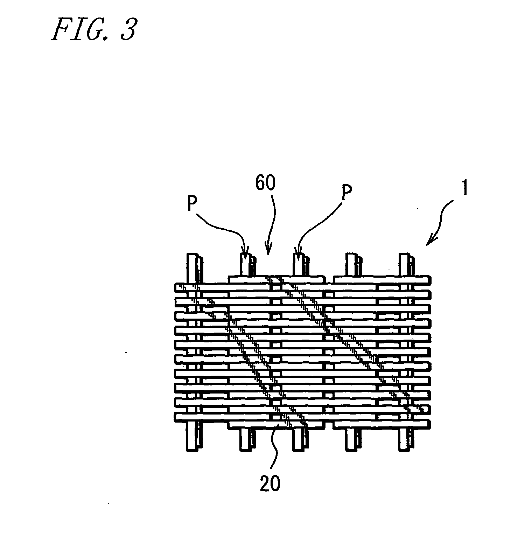

FIG. 3 is a top plan view of an example of arrangement of the link plates 20 in the chain 1. The plurality of link plates 20 are placed on one another in a thickness direction and arranged in predetermined order in a chain width direction and a chain length direction, and the pin members **P** are inserted through the first through holes 21 and the second through holes 22 to connect the plates.

The plurality of pin members **P** are arranged substantially in parallel at predetermined pitch intervals determined by an interval (see FIG. 2) between the first through hole 21 and the second through hole 22 formed in each link plate 20 in the chain length direction. The pin members **P** are inserted through the through holes 21 and 22 so that the plurality of link plates 20 are bendable to one another as described later.

In FIG. 3, a predetermined number of link plates 20 placed in the same position (the same phase) in the chain length direction and arranged substantially in parallel in the chain width direction, and two sets of pin members **P** inserted through the plates constitute a pitch portion 60, and the chain 1 is configured by continuously connecting pitch portions 60 bendably in the chain length direction.

Returning to FIG. 2, the first through hole 21 has a press fitting margin for the pin 30 inserted therethrough in a range shown by the broken lines J. Specifically, the pin 30 inserted through the first through hole 21 is press fitted into the first through hole 21 within the range shown by the broken lines **K.**

The strip 40 inserted through the first through hole 21 is inserted so as to be rotatable while coming into rolling contact (or rolling contact including slight sliding contact) with a side surface of the pin 30 inserted through the first through hole 21. The first through hole 21 is formed into a shape that allows the strip 40 to rotate with a side surface of the strip 40 and an inner peripheral surface of the first through hole 21 having a contact surface.

The strip 40 inserted through the second through hole 22 is press fitted into the second through hole 22 within a range shown by the broken lines K. The pin 30 inserted through the second through hole 22 is inserted so as to be rotatable while coming into rolling contact (or rolling contact including slight sliding contact) with the side surface of the strip 40 inserted through the second through hole. The second through hole 22 is formed into a shape that allows the pin 30 to rotate with a side surface of the pin 30 and an inner peripheral surface of the second through hole 22 having a contact surface.

The pin 30 inserted through the first through hole 21 by press fitting, and the strip 40 inserted through the second through hole 22 by press fitting can be press fitted at room temperature, but may be press fitted into the first through hole 21 and second through hole 22, respectively, by cold shrink fitting or cold fitting.

The pin 30 rotatably inserted through the second through hole 22 of the link plate 20 is press fitted into a first through hole 21a of a link plate 20a adjacent to the link plate 20 and connected with displacement in the chain circumferential direction. The strip 40 press fitted into the second through hole 22 of the link plate 20 is rotatably inserted through the first through hole 21 a of the link plate 20a. The pin 30 and the strip 40 press fitted into or inserted through the link plates 20 and 20a rotate in rolling contact with each other to allow the link plates 20 and 20a to be bendable to each other.

As described above, the link plates 20 placed on one another and connected in the chain circumferential direction are bendably connected to bendably connect adjacent pitch portions 60, thereby configuring a circumferentially bendable chain 1.

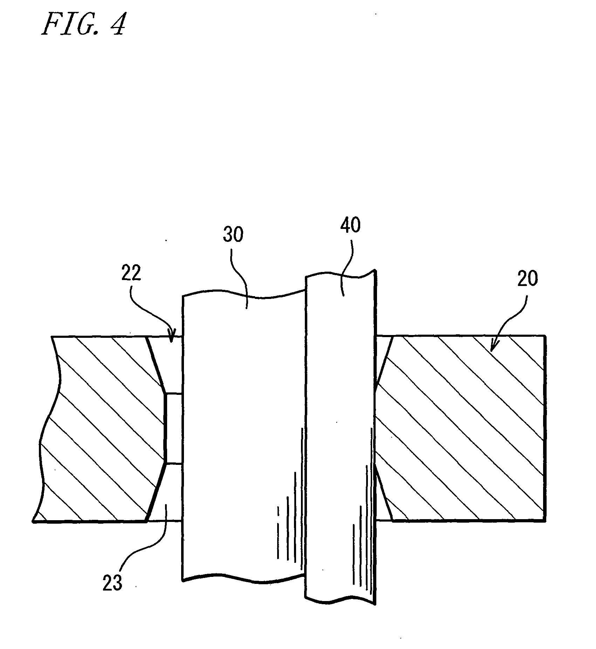

FIG. 4 is a sectional view of the chain 1 taken along the line B-B in FIG. 2. A chamfered portion 23 is provided in an end of an inner peripheral surface of the second through hole 22 of the link plate 20 over the entire periphery. A chamfered portion (not shown) is also provided in an end of an inner peripheral surface of the first through hole 21.

In the chain 1 according to the embodiment configured as described above, the chamfered portions are provided in the ends of the inner peripheral surfaces of the first and second through holes 21 and 22 to provide a degree of freedom to an angle formed between a length direction of the pin 30 and hole axis directions of the first and second through holes 21 and 22, thereby providing flexibility in bending in directions other than a circumferential direction.

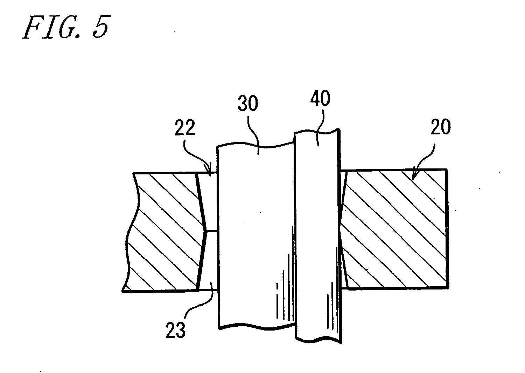

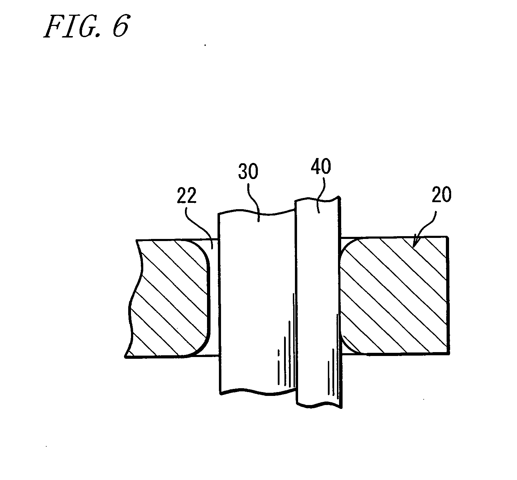

In the chain 1 according to the embodiment, an example having the chamfered portions 23 is illustrated, but for example, as shown in FIG. 5, the chamfered portions 23 may be provided over substantially the entire surfaces including the ends of the inner peripheral surfaces of the first and second through holes 21 and 22, or as shown in FIG. 6, the ends of the inner peripheral surfaces of the first and second through holes 21 and 22 may be rounded.

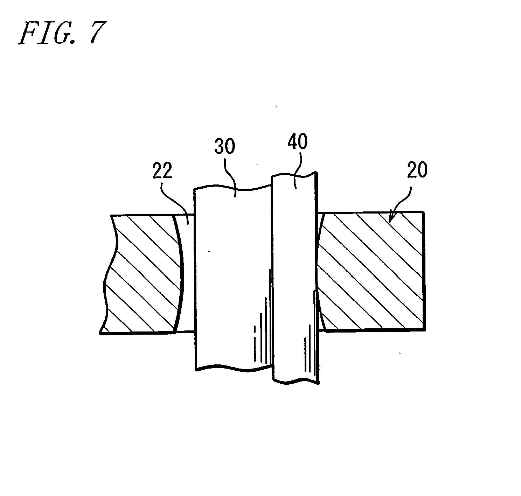

Also, as shown in FIG. 7, crownings (convex curved surfaces) may be provided over substantially the entire surfaces including the ends of the inner peripheral surfaces of the through holes 21 and 22.

Such chamfers in the inner peripheral surfaces of the through holes 21 and 22 may be provided by turning or also barreling.

Now, the concept of an amount of skew of the chain will be described.

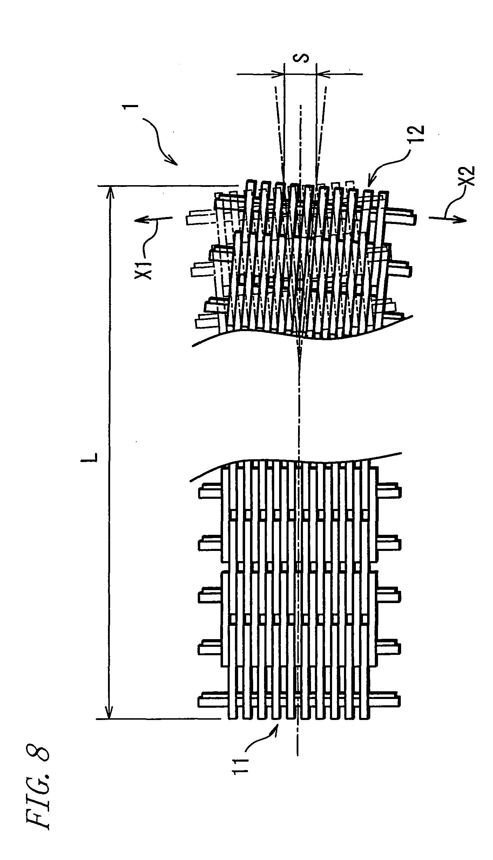

FIG. 8 is a top view of the chain for illustrating the amount of skew of the chain. In the figure, part of the chain 1 is omitted. The chain 1 is used in an endless manner as described above, and in the figure, part of the chain is cut by a predetermined chain length L and arranged substantially in a straight line without being bent. A pin 30a positioned in one end 11 of the chain 1 is secured immovably in any directions.

When a force is applied in directions of arrows **X1** and **X2** (to the right and left in the chain width direction) in the figure from one end 11 to the other end 12 of the chain 1, a center in the chain width direction of the other end 12 is moved with a certain width as shown and displaced from a center in the chain width direction of one end 11. The inventors have defined a width of the displacement as an amount of skew S in the chain width direction in the chain length **L**. Specifically, the amount of skew S indicates a degree of flexibility in the chain width direction.

In the chain 1 of the embodiment, the chamfered portions are provided in the inner peripheral surfaces 21 and 22 of the first and second through holes as described above to provide flexibility in the width direction of the chain 1. For the flexibility, a shape of the chamfered portion 23 is set so that an amount of skew S in the chain width direction per chain length of 200 mm of the chain 1 is 1 to 2 mm.

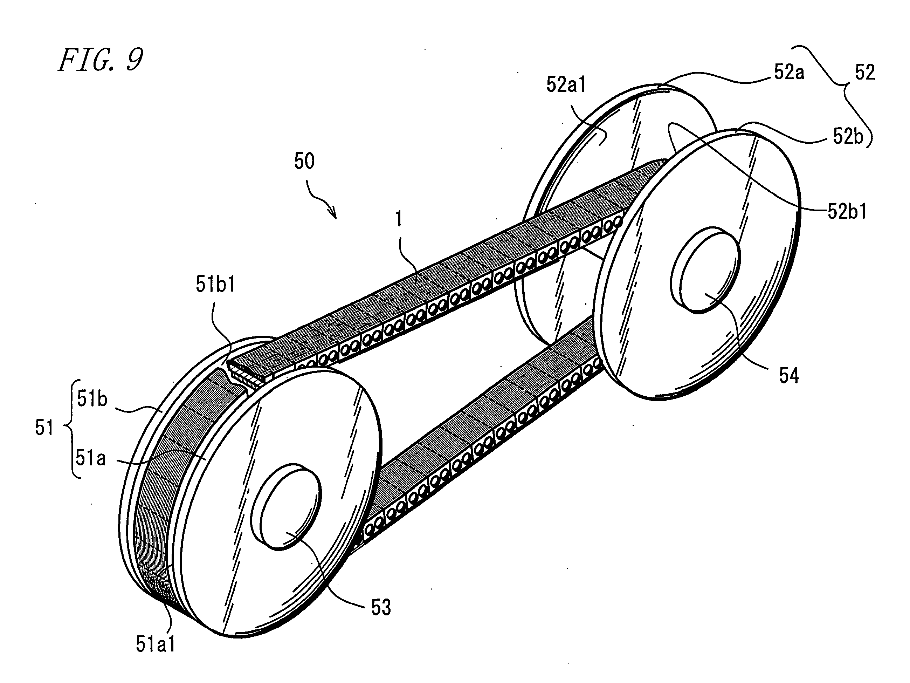

FIG. 9 is a schematic perspective view of a configuration of essential portions of a chain-type continuously variable transmission according to an embodiment of a power transmission device of the present invention including the chain 1. The chain-type continuously variable transmission 50 (hereinafter also simply referred to as a "continuously variable transmission") is mounted as a transmission of, for example, an automobile, and includes a primary pulley 51 made of metal as a first pulley, a secondary pulley 52 made of metal as a second pulley, and the chain 1 spanning the pulleys in an endless manner according to the present invention. For the sake of clarity, the chain 1 in FIG. 9 is partially clearly shown in section.

The primary pulley 51 is mounted rotatably integrally with an input shaft 53 connected to an engine, and includes a stationary sheave 51 a having a sheave surface 51a1 of conical shape, and a movable sheave 51 b having a sheave surface 51b1 of conical shape placed to face the sheave surface 51a1.

The sheave surfaces 51a1 and 51b1 of the sheaves form a groove, and the groove holds the pin end surfaces 31 of the chain 1 with high pressure from opposite sides in the width direction of the chain 1. A hydraulic actuator (not shown) is connected to the movable sheave 51 b, which allows the movable sheave 51 b to be movable axially of the input shaft 53.

At speed change, the movable sheave 51b is moved axially of the input shaft 53 to change a groove width of the groove formed by the sheave surfaces 51al and 51bl. The chain width of the chain 1 is always constant, and thus the chain 1 is wound around the primary pulley 51 at a radial position corresponding to the chain width to allow a winding radius of the chain 1 with respect to the input shaft 53 to be changed.

On the other hand, the secondary pulley 52 is mounted rotatably integrally with an output shaft 54 connected to drive wheels, and like the primary pulley 51, includes a stationary sheave 52a and a movable sheave 52b having sheave surfaces for forming a groove that holds the chain 1 with high pressure.

Sheave surfaces 52al and 52bl of the sheaves form the groove, and the groove holds the pin end surface 31 of the chain 1 with high pressure from opposite sides in the chain width direction. A hydraulic actuator (not shown) is connected to the movable sheave 52b, which allows the movable sheave 52b to be movable axially of the output shaft 54.

At speed change, the movable sheave 52b is moved axially of the output shaft 54 to change a groove width of the groove formed by the sheave surfaces 52al and 52bl. The chain width of the chain 1 is always constant, and thus the chain 1 is wound around the secondary pulley 52 at a radial position corresponding to the chain width to allow a winding radius of the chain 1 with respect to the output shaft 54 to be changed.

The continuously variable transmission 50 according to the embodiment configured as described above can perform a stepless speed change in the following manner. Specifically, when rotation of the input shaft 53 is transmitted to rotation of the output shaft 54 with reduced speed, the groove width of the primary pulley 51 is increased by moving the movable sheave 51 b to reduce the winding radius of the chain 1 around the primary pulley 51, and the groove width of the secondary pulley 52 is reduced by moving the movable sheave 52b to increase the winding radius of the chain 1 around the secondary pulley 52.

On the other hand, when the rotation of the input shaft 53 is transmitted to the rotation of the output shaft 54 with increased speed, the groove width of the primary pulley 51 is reduced by moving the movable sheave 51b to increase the winding radius of the chain 1 around the primary pulley 51, and the groove width of the secondary pulley 52 is increased by moving the movable sheave 52b to reduce the winding radius of the chain 1 around the secondary pulley 52. Thus, the winding radii of the chain 1 with respect to the input shaft 53 and the output shaft 54 are changed to allow speed increase and reduction between the input shaft 53 and the output shaft 54.

Now, the concept of misalignment of the chain-type continuously variable transmission will be described.

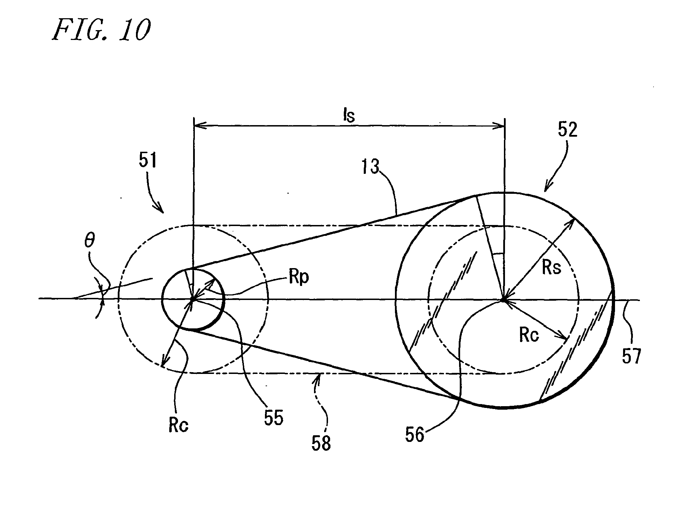

FIG. 10 is a side view for illustrating a geometric relationship between the primary pulley 51, the secondary pulley 52, and the chain 1 wound around the pulleys in the continuously variable transmission 50. The figure shows a state at, for example, a transmission ratio of n. The relationship is expressed by Formula (1) below

$$N = Rp / Rs \quad \cdots (1),$$

where **Rp** is an effective radius or the primary pulley 51, and **Rs** is an effective radius of the secondary pulley 52.
An entire length **Lc** of the chain 1 is expressed by Formula (2) below

$$Lc = Rp(\pi-2\theta) + Rs(\pi+2\theta) + 2(Rp \cdot \sin\theta - Rs \cdot \sin\theta + ls)\cos\theta \quad \cdots (2),$$

where ls is a dimension between the shafts at a center point 55 of the primary pulley 51 (a shaft center of the input shaft 53) and a center point 56 of the secondary pulley 52 (a shaft center of the output shaft 54), and θ is an inclination angle formed by a portion 13 that is not wound around the pulleys of the chain 1, and a straight line 57 connecting the center point 55 and the center point 56.
The relationship between the inclination angle θ, the effective radius **Rp**, and the effective radius **Rs** is also expressed by Formula (3) below.

$$\sin\theta = (Rs-Rp) / ls \quad \cdots (3).$$

From Formulae (1), (2) and (3), the effective radius **Rp,** the effective radius **Rs,** and the inclination angle θ at the transmission ratio **n** can be calculated.
The broken lines 58 show a relationship between the primary pulley 51, the secondary pulley 52, and the chain 1 at the transmission ratio n = 1, and the effective radii **Rp** and **Rs** of the pulleys in this case are equal. An effective radius **Rc** of each pulley at this time is expressed by Formula (4) below from Formulae (1) and (3).

$$Rc = Rp = Rs = (Lc-2ls) / 2\pi \text{ (at the transmission ratio n = 1)} \quad \cdots (4).$$

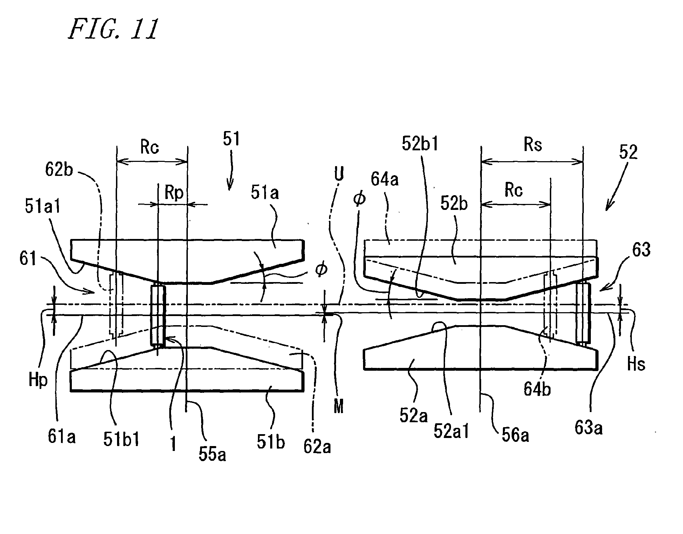

FIG. 11 is a sectional view on the straight line 57 for illustrating the geometric relationship between the primary pulley 51, the secondary pulley 52, and the chain 1 in FIG. 10. For the sake of clarity of the figure, the input and output shafts or the like are omitted.
In the figure, the effective radius **Rp** of the primary pulley 51 is smaller than **Rc** as shown in FIG. 10, and the movable sheave 51b is moved away from the stationary sheave 51 a so as to increase a groove width of a pulley groove 61 formed by the sheave surfaces 51al and 51b1. The chain 1 is positioned at a distance of **Rp** from a centerline 55a of the primary pulley 51. At this time, a centerline of groove width 61a of the pulley groove 61 is moved toward the movable sheave 51b with the movement of the movable sheave 51 b.
The broken line 62a shows a position of the movable sheave 51b at an effective radius **Rp** of **Rc,** the broken line 62b shows a position of the chain 1 at this time, the broken line 64a shows a position of the movable sheave 52b at an effective radius **Rs** of **Rc,** and the broken line 64b shows a position of the chain 1 at this time. The pulleys 51 and 52 are configured so that when the effective radii of the pulleys 51 and 52 are **Rc,** the centers of the groove widths thereof are aligned, and the centers of the groove widths of the pulleys 51 and 52 at this time are shown by the straight line **U.**
Now, an amount of movement of the centerline of groove width 61a is considered with reference to the straight line U. Specifically, an amount of movement **Hp** that is displacement between the centerline of groove width 61a and the straight line U is expressed by Formula (5) below

$$Hp = (Rc-Rp)\sin\varphi \quad \cdots (5),$$

where φ is an inclination angle of the sheave surfaces 51al and 51bl.
The effective radius **Rs** of the secondary pulley 52 is larger than **Rc** as in FIG. 10, and thus the movable sheave 52b is moved closer to the stationary sheave 52a so as to increase a groove width of a pulley groove 63 formed by the sheave surfaces 52al and 52b1. The chain 1 is positioned at a distance of **Rs** from the centerline 56a of the secondary pulley 52. At this time, a centerline of groove width 63a of the pulley groove 63 is moved toward the stationary sheave 52a with the movement of the movable sheave 52b.

An amount of movement of the centerline of groove width 63a is also considered with reference to the straight line **U** as in the case of the primary pulley 51. Specifically, an amount of movement **Hp(sic)** that is displacement between the centerline of groove width 63a and the straight line **U** is expressed by Formula (6) below

$$\mathbf{Hs = (Rs\text{-}Rc)sin\varphi} \quad \cdots (6),$$

where $\phi$ is an inclination angle of the sheave surfaces 52a1 and 52bl.

In FIG. 11, the movable sheave 51b is placed on a lower side of the straight line U on the sheet surface in the primary pulley 51, and the movable sheave 52b is placed on an upper side of the straight line **U** on the sheet surface in the secondary pulley 52. At this time, if the dimension **Is** between the shafts is fixed, an increase in the groove width of one pulley always reduces the groove width of the other pulley, and thus the centers of the groove widths of the pulleys are always moved in the same direction with respect to the straight line **U.**

A difference between the amounts of movement **Hp** and **Hs** causes displacement between the centers of the groove width of the primary pulley 51 and the secondary pulley 52, that is, misalignment. Such a misalignment inevitably occurs in terms of mechanism in the continuously variable transmission 50 that changes speed while changing the groove widths of the pulleys as described above.

An amount of misalignment **M** at this time is expressed by Formula (7) below.

$$\mathbf{M = |Hp\text{-}Hs| = |(Rc\text{-}Rp)sin\varphi \text{ - } (Rs\text{-}Rc)sin\varphi|} \quad \cdots (7).$$

For the effective radius **Rp** and the effective radius **Rs** in Formula (7), values at the transmission ratio n can be calculated from Formulae (1), (2) and (3), and thus the amount of misalignment **M** at the transmission ratio n can be calculated by substituting other parameters determined by specifications of the continuously variable transmission 50 in these Formulae.

Based on the above described concept of misalignment of the chain-type continuously variable transmission, if a continuously variable transmission 50 having, for example, a dimension **Is** between shafts of 150 to 200 mm is assumed, and a maximum value of an amount of misalignment **M** when the continuously variable transmission 50 increases or reduces speed is calculated, the value is 0.5 to 1 mm.

At this time, opposite ends of the portion 13 (FIG. 10) that is not wound around the pulleys of the chain 1 are forced to be displaced by 1 to 2 mm at the maximum in the width direction of the chain 1 due to machining errors of the pulleys and the input and output shafts or deformation by chain tension in addition to the misalignment.

The chain 1 according to the embodiment used in the continuously variable transmission 50 is provided with flexibility in the chain width direction so that the amount of skew S in the chain width direction per chain length of 200 mm is 1 to 2 mm, by providing the chamfered portions 23 in the ends of the inner peripheral surfaces of the first and second through holes 21 and 22 of the link plate 20.

When the amount of skew **S** is 1 mm or less, the above described misalignment that occurs in terms of mechanism cannot be accepted, and abnormal wear and reduction in transmission efficiency may not be prevented. For an amount of skew **S** of 2 mm or more, deformability of the chain 1 is too high, which may cause a flutter of the chain 1 and increase noise or vibration. Also, a contact between each sheave and the pin end surface 31 of the chain 1 becomes unstable, which may cause abnormal wear.

The chain 1 of the embodiment has flexibility enough to accept the misalignment that inevitably occurs in terms of mechanism as described above, thereby allowing contact surfaces between the sheave surfaces of the pulleys 51 and 52 and the pin end surface 31 to be properly maintained. Thus, even if the chain is integrated in the continuously variable transmission 50 and power transmission is performed for a long period, abnormal wear and reduction in transmission efficiency can be effectively prevented.

In the continuously variable transmission 50 according to the embodiment configured as described above, even if the misalignment that inevitably occurs in terms of mechanism occurs between the pulleys 51 and 52, the chain 1 is provided with flexibility with a proper amount of skew, thereby suitably accepting the misalignment and allowing the contact surfaces between the sheave surfaces of the pulleys 51 and 52 and the pin end surface 31 to be properly maintained. Thus, even if power transmission is performed for a long period, occurrence of abnormal wear and abnormal slip can be effectively prevented. This provides a continuously variable transmission that can perform power transmission stably for a long period.

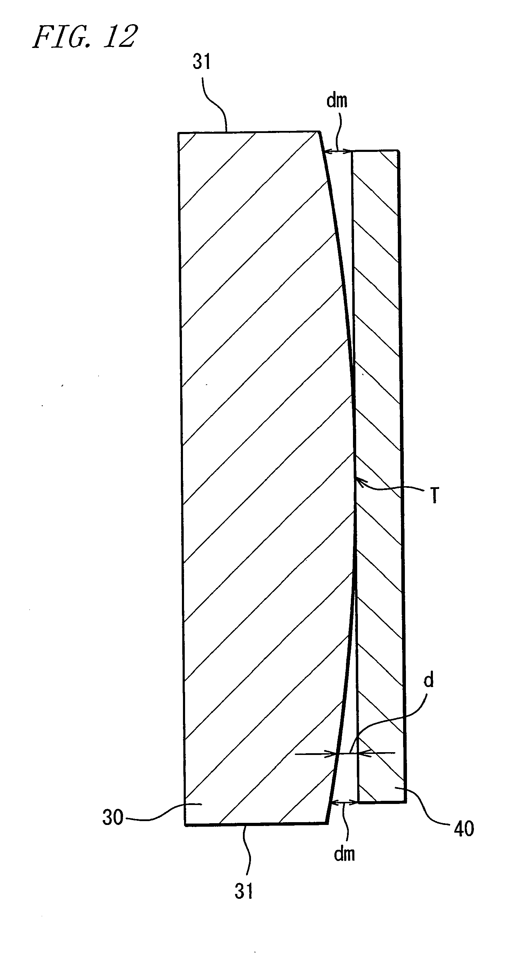

FIG. 12 is an axial sectional view of a pin and a strip when a chain according to a second embodiment of a power transmission chain of the present invention is seen from above. A main difference between this embodiment and the first embodiment is that no chamfered portion is provided in the ends of the inner peripheral surfaces of the first and second through holes 21 and 22 of the link plate 20, and that a crowning (a convex curved surface) in the width direction of the chain 1 is provided in a side surface on the side of a contact portion **T** of the pin 30 that comes into contact with the strip 40 at the contact portion **T.** In FIG. 12, a curvature of the crowning is magnified for the sake of clarity of the shape. Other points are the same as those in the first embodiment, and descriptions thereof will be omitted.

In FIG. 12, the crowning in the chain width direction is provided in one side surface of the pin 30, and thus gaps **d** are created in the chain circumferential direction at opposite ends of the pin 30 and the strip 40. At opposite end positions of the strip 40, the gaps **d** are at a maximum value **dm.** In the embodiment, the crowning is provided with substantially the same curvature over the entire length direction of the pin 30, and thus the maximum value **dm** of the gaps **d** depends on the curvature.

The length of the strip 40 is shorter than that of the pin 30, and thus the gaps **d** are at the maximum at the opposite end positions of the strip 40. The gap d means one created by the crowning provided in the chain width direction, and does not mean a distance of a gap **Q** (see FIG. 2) between the pin 30 and the strip 40 that exists even without the crowning.

In the chain 1 of the embodiment, the crowning (convex curved surface) in the chain width direction provided in one side surface of the pin 30 provides a degree of freedom to a contact angle between the pin 30 and the strip 40, and thus the chain 1 has flexibility in bending in directions other than a circumferential direction. For the flexibility, the maximum value **dm** of the gap **d** is set so that the amount of skew **S** in the chain width direction per chain length of 200 mm of the chain 1 is 1 to 2 mm.

A method for measuring the maximum value **dm** of the gap **d** is determined as described below.

A reference state is considered where the chain 1 in a straight state without being bent in any direction is placed on a horizontal surface. The chain 1 is of endless belt shape, but a portion in the chain 1 is herein considered that is in contact on the horizontal surface and not bent in any direction.

Then, the maximum value dm of the gap **d** is a maximum value of the gap **d** between the pin 30 and the strip 40 in a section (see FIG. 12), the section being a horizontal surface (see the line B-B in FIG. 2) passing a center point of the contact portion **T** (centroid; when the contact portion **T** is a point, the point) where the pin 30 and the strip 40 comes into contact with each other in the chain 1 in such a reference state.

The maximum value **dm** of the gap **d** relates to bendability of the chain 1, and is thus a maximum value within a range where the contact portion **T** can be moved by the chain 1 bending (in any directions), and a gap distance of a portion that is not likely to relate to the flexibility of the chain 1 is not considered.

Specifically, for example, in FIG. 12, if a concave portion is provided in one side surface of the pin 30 or the strip 40 that face each other, or the gaps **d** are extremely increased near opposite ends of the pin 30 or the strip 40, and there is a portion that does not become the contact portion **T** even if the chain 1 is bent to the limit in any directions, a gap distance of the portion is not considered.

With the crowning (convex curved surface) in the chain width direction provided in one side surface of the pin 30, even if the chain 1 of the embodiment configured as described above is integrated in the continuously variable transmission 50 and power transmission is performed for a long period, abnormal wear and reduction in transmission efficiency can be effectively prevented.

Further, in the embodiment, the contact angle between the pin 30 and the strip 40 can be relatively large, and thus higher flexibility than the first embodiment is easily obtained at opposite ends. The maximum value dm of the gap **d** is adjusted to facilitate setting to flexibility necessary as the chain 1.

In the embodiment, the crowning is provided in the pin 30, but a crowning may be provided in a side surface on the side of the contact portion **T** of the strip 40, or crownings may be provided in both of them.

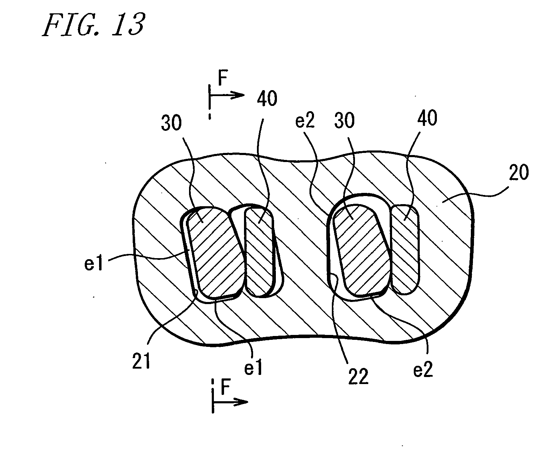

FIG. 13 is a circumferential sectional view of part of a chain according to a third embodiment of a power transmission chain of the present invention. A main difference between this embodiment and the first embodiment is that no chamfered portion is provided in the ends of the inner peripheral surfaces of the first and second through holes 21 and 22 of the link plate 20, and that gaps **e1** and e2 are provided between side surfaces of the pins 30 that are not in contact with the strips 40 and the inner peripheral surfaces of the first and second through holes 21 and 22. Other points are the same as in the first embodiment, and descriptions thereof will be omitted.

In the chain 1 of the embodiment, the gaps **e1** and **e2** provide a degree of freedom to angles formed between the length directions of the pins 30 and the hole axis directions of the first and second through holes 21 and 22, thereby providing flexibility in bending in directions other than a circumferential direction. For the flexibility, the gaps **e1** and **e2** are set so that an amount of skew **S** in the chain width direction per chain length of 200 mm of the chain 1 is 1 to 2 mm. The gap **e2** does not indicate a gap necessary for the pin 30 to rotate in the second through hole 22, but indicates a gap for providing a degree of freedom to an angle of the pin 30 in the length direction.

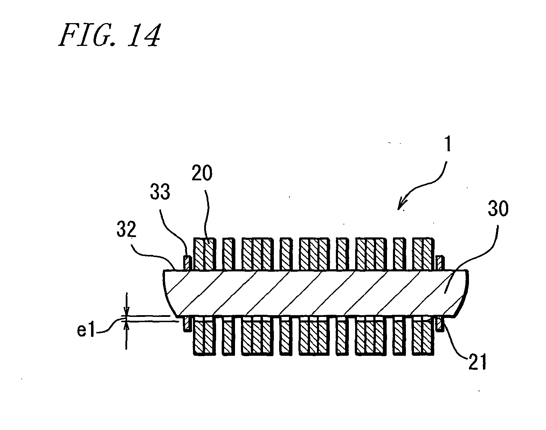

FIG. 14 is a sectional view in the chain width direction taken along the line F-F in FIG. 13. The pin 30 is not press fitted into the first through hole 21 (not originally press fitted into the second through hole 22) because the gap **e1** is provided between the side surface of the pin and the inner peripheral surface of the first through hole 21. Thus, protrusions 33 are formed on side surfaces 32 at opposite ends of the pin 30, and the protrusions 33 lock the link plates 20 to prevent the link plates 20 from falling off.

The protrusion 33 may have any shape as long as it can lock the link plates 20. For example, the protrusion may be ridges formed along an outer periphery at opposite ends of the pin 30, a ridge formed only on a side surface facing an inner wall surface of the first through hole 21, or a convex portion divided into a plurality of portions. Such a protrusion may be easily formed using a caulker or the like. The protrusion 33 may be formed by securing a separate member such as a ring-shaped member (a retaining ring or a snap ring), a split pin, a clip, or a holder to the pin or the strip.

With the gaps **e1** and **e2,** if the chain 1 according to the embodiment configured as described above is integrated in the continuously variable transmission 50 and power transmission is performed for a long period, abnormal wear and reduction in transmission efficiency can be effectively prevented. In the embodiment, flexibility of the chain 1 can be obtained by changing the shapes of the first and second through holes 21 and 22, thereby easily obtaining the above described advantages.

In the embodiment, the protrusions 33 are provided on the side surface at the opposite ends of the pin 30 to lock the link plates 20, thereby effectively preventing a problem of falling off of the link plates 20.

The aspect has been described of providing the gaps **e1** and **e2** between the side surfaces of the pins 30 and the inner peripheral surfaces of the first and second through holes 21 and 22 of the link plate 20, and forming the protrusions 33 on the side surface at the opposite ends of the pin 30, but the present invention is not limited to this. Specifically, gaps that accept misalignment may be provided at least one of between the inner peripheral surfaces of the first and second through holes 21 and 22 and the side surfaces of the pins 30, and between the inner peripheral surfaces of the first and second through holes 21 and 22 and the side surfaces of the strips 40. In order to prevent the link plates 20 from falling off, the protrusions that lock the link plates 20 may be formed in a side surface at opposite ends of at least one of the pin 30 and the strip 40.

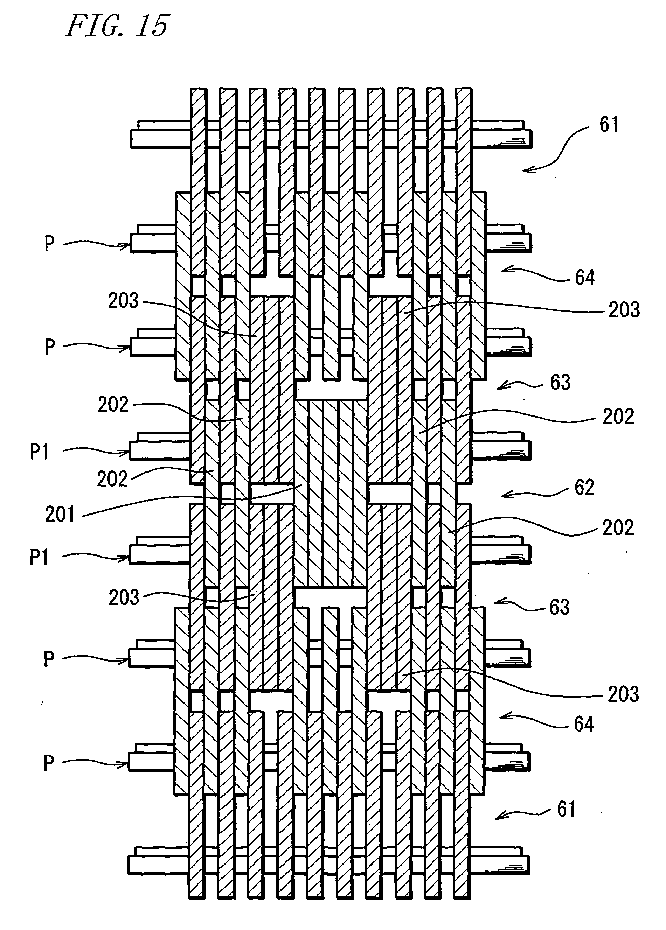

FIG. 15 is a top view of an example of arrangement of link plates of a chain according to a fourth embodiment of a power transmission chain of the present invention. A main difference between this embodiment and the first embodiment is that no chamfered portion is provided in the ends of the inner peripheral surfaces of the first and second through holes 21 and 22 of the link plate 20, and a centrally dense pitch portion 62 where the link plates 20 are densely arranged in a range around a center in the chain width direction is placed in part of plurality of pitch portions that constitute the chain 1. Other points are the same as in the first embodiment, and the descriptions thereof will be omitted.

The centrally dense pitch portion 62 includes adjacent two (two sets of) pin members P1, five link plates 201 arranged between the two sets of pin members **P1** around the center in the chain width direction, and four link plates 202 arranged closer to ends in the chain width direction. Link plates 201, 202 and 203 in FIG. 15 have substantially the same shapes as the above described link plate 20, but denoted by different reference numerals for describing the arrangement of the link plates 20. The pin member **P1** also has substantially the same shape as the above described pin member **P,** but denoted by a different reference numeral for describing the pin members **P** that constitute the centrally dense pitch portion 62.

The link plates of the centrally dense pitch portion 62 are arranged as follows. Specifically, the five link plates 201 are arranged on one another substantially without gaps around the center in the chain width direction, and the remaining four link plates 202 are arranged, two for each of the right and left, closer to the ends in the width direction of the chain 1.

The link plates 202 arranged adjacent to the right and left of the five link plates 201 arranged on one another are arranged with a gap substantially corresponding to a thickness of three link plates 20 on the right and left so as to sandwich the three link plates 203 arranged on one another in pitch portions 63 connected adjacent to opposite sides in the chain circumferential direction of the centrally dense pitch portion 62.

The link plates 202 arranged on the ends in the chain width direction among the link plates 202 arranged with the gap are arranged at the right and left ends in the chain width direction with a gap substantially corresponding to a thickness of one link plate 20 so as to sandwich one link plate 20 arranged in the pitch portion 63. Specifically, as compared with the arrangement of the five link plates 201, the arrangement of the link plates 202 is coarse with wide gaps between the adjacent link plates.

In the pitch portions 63 connected adjacent to opposite sides in the chain circumferential direction of the centrally dense pitch portion 62, and the pitch portions 64 connected to the other sides of the pitch portions 63 that are not connected to the centrally dense pitch portion 62, the link plates 20 are arranged so that the link plates 20 can connect pitch portions 61 arranged in the chain width direction at equal intervals.

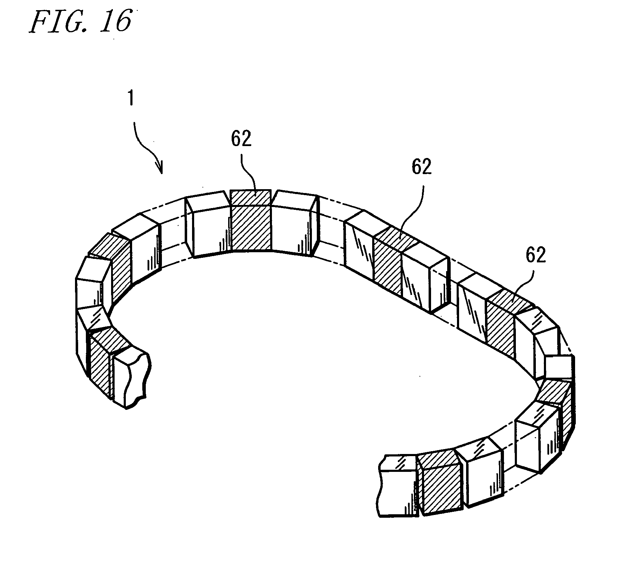

FIG. 16 schematically shows a state of placement of the centrally dense pitch portions 62 in the entire chain 1. In the figure, each pitch portion is shown in a rectangle, and pitch portions are connected to constitute the chain 1. Hatched portions in the figure are the centrally dense pitch portions 62, and in each portion without hatching, a certain number of pitch portions are connected other than the centrally dense pitch portions 62 such as pitch portions in which the link plates 20 are arranged at equal intervals in the chain width direction. In the chain 1 according to the embodiment, the centrally dense pitch portions 62 are surely connected at equal intervals in the chain circumferential direction.

In the above described chain 1, in the centrally dense pitch portion 62, the link plates 20 arranged closer to the right and left ends where bending other than circumferential bending of the pitch portion is relatively strongly restrained are coarsely arranged with wide spaces between the adjacent link plates 20 as compared with the link plates around the center in the chain width direction. Thus, a restraining force of the bending other than circumferential bending of the pitch portion is reduced to provide flexibility in the bending.

Then, the centrally dense pitch portions 62 provided with the flexibility are placed at equal intervals in the chain circumferential direction, thereby providing the flexibility to the entire chain 1. For the flexibility, the centrally dense pitch portion 62 is placed so that an amount of skew S in the chain width direction per chain length of 200 mm of the chain 1 is 1 to 2 mm.

In the chain 1 of the embodiment configured as described above, the centrally dense pitch portion 62 is appropriately placed as described above, and thus even if the chain 1 is integrated in the continuously variable transmission 50 and power transmission is performed for a long period, abnormal wear and reduction in transmission efficiency can be effectively prevented. Further, the arrangement of the link plates 20 in the pitch portion is simply changed to provide flexibility to the entire chain 1, which can be implemented without changing the shapes of the pin 30, the strip 40, and the first and second through holes 21 and 22 from those of the conventional one.

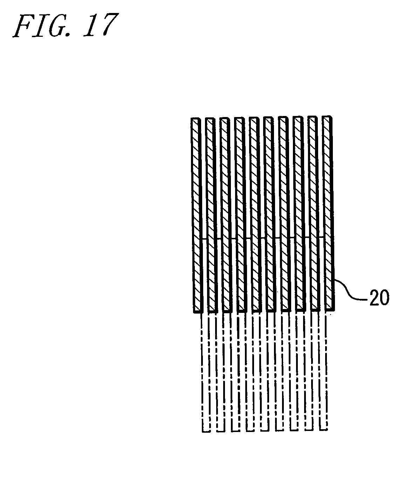

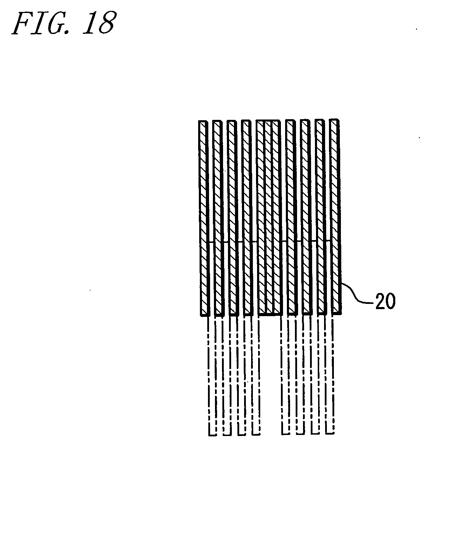

Now, the centrally dense pitch portion and a variant thereof will be described with detailed examples. Figures 17 to 20 are schematic diagrams showing variations of arrangement of the link plates 20 in the entire chain width of one pitch portion. In FIG. 17, all the link plates 20 are arranged at equal intervals. On the other hand, in FIG. 18, three link plates 20 are arranged on one another substantially without gaps in the center, and the other link plates 20 are arranged at equal intervals, each interval substantially corresponding to a thickness of one link plate 20 on the right and left.

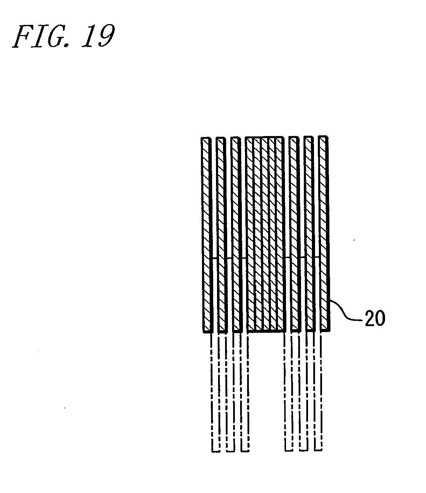

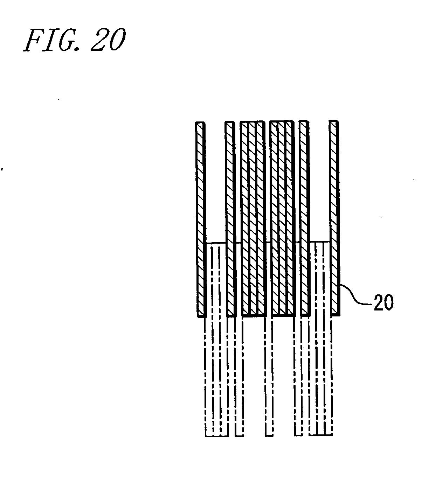

In FIG. 19, four link plates 20 are arranged on one another substantially without gaps in the center, and the other link plates 20 are arranged at equal intervals, each interval substantially corresponding to a thickness of one link plate 20 on the right and left. In FIG. 20, two sets of three link plates 20 are arranged on one another substantially without gaps in the center, each interval substantially corresponding to a thickness of one link plate 20.

Link plates 20 placed adjacent to ends in the chain width direction of the three link plates 20 arranged on one another substantially without gaps are arranged with an interval substantially corresponding to a thickness of one link plate 20 on the right and left. Link plates 20 arranged on the ends in the chain width direction of the link plates 20 arranged with an interval substantially corresponding to a thickness of one link plate 20 are arranged on the right and left ends in the chain width direction with an interval substantially corresponding to a thickness of three link plates 20.

The centrally dense pitch portion means a pitch portion in which, as shown in Figures 18 to 20, at least one link plate 20 is placed on each of the opposite ends near the opposite ends in the entire chain width, and the adjacent link plates 20 are densely arranged substantially without gaps around the center in the chain width direction or densely arranged at smaller intervals than in portions closer to the ends in the chain width direction. The centrally dense pitch portion is, of course, not limited to the examples in Figures 18 to 20, and may include other similar conceivable arrangements.

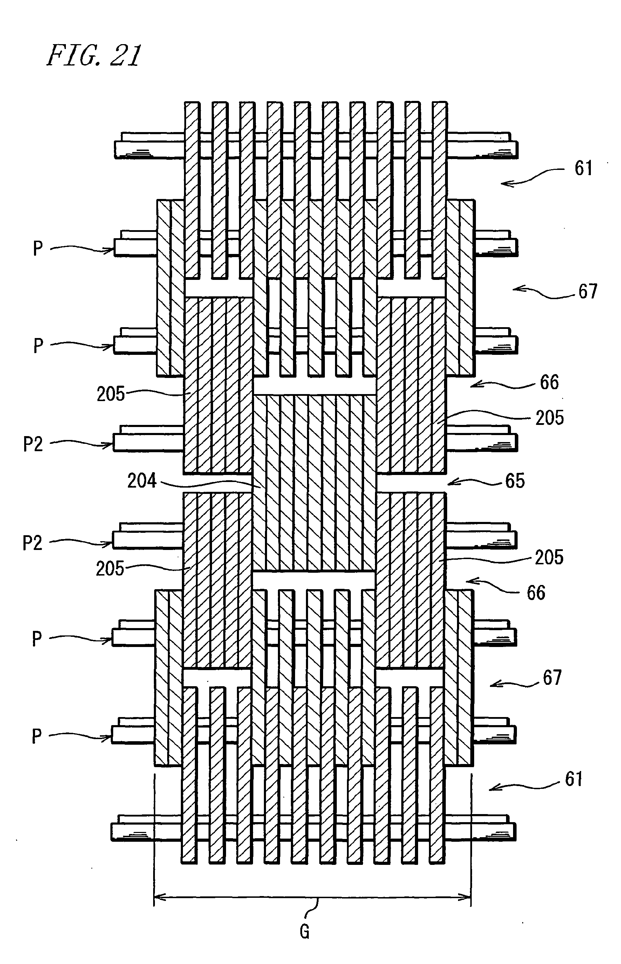

FIG. 21 is a top view of an example of arrangement of link plates of a chain according to a fifth embodiment of a power transmission chain of the present invention. A main difference between this embodiment and the fourth embodiment is that instead of the centrally dense pitch portion, a centrally concentrated pitch portion 65 is placed in which all the link plates 20 that constitute the pitch portion are concentrated around the center in the chain width direction and in a narrower range than the entire chain width G. Other points are the same as in the fourth embodiment, and descriptions thereof will be omitted.

In the chain 1 according to the embodiment is, as in the fourth embodiment, centrally concentrated pitch portions 65 are surely connected at equal intervals in the chain circumferential direction. The centrally concentrated pitch portion 65 is different from the centrally dense pitch portion in that no link plate 20 is arranged near opposite ends of the entire chain width **G.**

The entire chain width **G** is a width of a pitch portion arranged with the widest width in the chain width direction in the chain 1 in FIG. 21. The centrally concentrated pitch portion 65 includes two sets of pin members **P2** and nine link plates 204, and all the nine link plates 204 arranged between the two sets of pin members **P2** are arranged on one another substantially without gaps around the center in the width direction of the chain 1.

Then, pitch portions 66 connected adj acent to opposite ends in the chain circumferential direction of the centrally concentrated pitch portion 65 includes ten link plates 205, and five link plates 205 are arranged on one another substantially without gaps closer to each of the right and left ends in the chain width direction so as to sandwich the nine link plates 204 that constitute the centrally concentrated pitch portion 65 from opposite sides.

To the other sides of the pitch portions 66 that are not connected to the centrally concentrated pitch portion 65, pitch portions 67 in which nine link plates 20 are arranged are connected, and the link plates 20 are arranged so that the link plates 20 can connect pitch portions 61 arranged in the chain width direction at equal intervals.

In the chain 1 according to the embodiment, there is no link plate closer to the right and left ends where bending other than circumferential bending is restrained in the centrally concentrated pitch portion 65, and thus flexibility in the bending other than circumferential bending can be suitably obtained, thereby providing the flexibility to the entire chain 1. For the flexibility, the centrally concentrated pitch portion 65 is placed so that an amount of skew S in the chain width direction per chain length of 200 mm of the chain 1 is 1 to 2 mm.

In the chain 1 of the embodiment configured as described above, the centrally concentrated pitch portion 65 is appropriately placed as described above, and thus even if the chain is integrated in the continuously variable transmission 50 and power transmission is performed for a long period, abnormal wear and reduction in transmission efficiency can be effectively prevented.

Further, in the fourth embodiment, the link plates 20 are arranged closer to the ends in the chain width direction of the centrally dense pitch portion 62, while in the centrally concentrated pitch portion 65 of this embodiment, the link plates 20 are not arranged closer to the ends in the chain width direction, thereby providing higher flexibility. This increases a degree of freedom in design as the chain 1 such as the number of centrally concentrated pitch portions 65 placed or the placement position with respect to the entire chain 1.

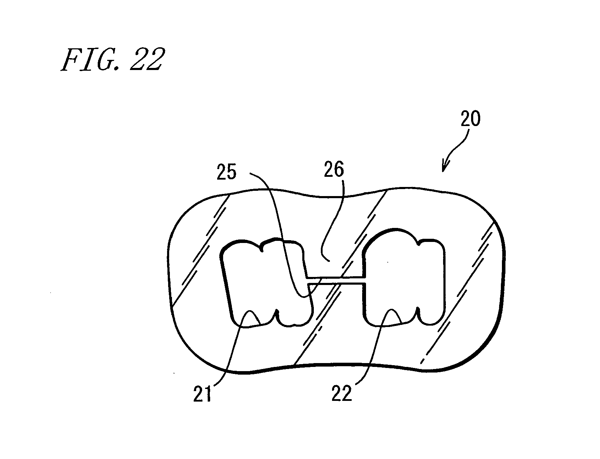

The present invention is not limited to the above described embodiments. For example, the two through holes (the first and second through holes 21 and 22) are formed in the link plate 20 of the power transmission chain 1 shown in each embodiment, but as shown in FIG. 22, a communication portion 25 that provides communication between the through holes 21 and 22 may be formed. In a link plate 20(sic) in FIG. 22, a communication portion 25 is provided to cross a columnar portion 26 between the through holes 21 and 22 in a link plate length direction.

Such a communication portion 25 is provided to facilitate deformation of the link plate 2, relieve stress concentration in peripheral edges of the through holes when a large force is applied from the pin 3 or the strip 4, and increase durability of the link plate. For a press fitting chain in which pins or strips are fitted and secured into link plates, the advantage of increasing durability due to relieving the stress concentration is large.

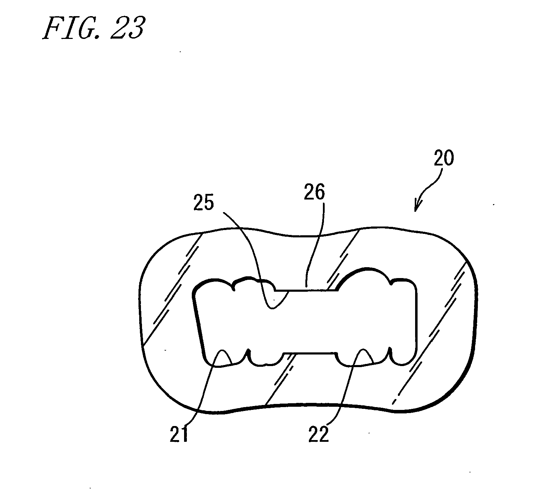

The communication portion 25 shown in FIG. 22 has a relatively narrow width, and in a variant in FIG. 23, the communication portion 25 has a relatively wide width. Narrowing the width of the communication portion 25 increases rigidity of the link plate as compared with the case with the wide width, and deformation of the link plate can be prevented in fabrication of the link plate by stamping.

Increasing the width of the communication portion 25 further facilitates deformation of the link plate as compared with the case with the narrow width, thereby further increasing the advantage of relieving the stress concentration. The width of the communication portion 25 may be appropriately determined by a dimension of a link or a load condition.

In each of the above described embodiments, the shown chain 1 is configured so that the pin end surface 31 comes into contact with the sheave surfaces of the pulleys 51 and 52 to perform power transmission, but the power transmission chain according to the present invention may be applied to, for example, a power transmission chain configured so that a link plate is provided with a contact portion with a sheave surface to perform power transmission, or a power transmission chain configured so that the chain is provided with a contact member (a friction block or the like) with a sheave surface in addition to the components of the chain of the embodiments to perform power transmission.

In the chain 1 of each embodiment, the pin 30 as the first pin and the strip 40 as the second pin have the different sectional shapes, but the pin 30 (the first pin) and the strip 40 (the second pin) may have the same sectional shape as long as they can bendably connect the link plates.

In the continuously variable transmission 50 according to the embodiment, the chain (see Figures 12 to 23) according to the second to fifth embodiments may be, of course, used as the chain 1 spanning between the primary pulley 51 and the secondary pulley 52.

**Claims**

1. A power transmission chain comprising, as chain components:

   a plurality of link plates having through holes; and
   a plurality of pin members that are inserted through the through holes and connect the plurality of link plates to one another,
   the chain spanning a first pulley having a sheave surface of conical shape and a second pulley having a sheave surface of conical shape, and the chain components and the sheave surfaces of the first and second pulleys coming into contact with each other to transmit power,
   wherein an amount of skew in a chain width direction per chain length of 200 mm is 1 to 2 mm.

2. The power transmission chain according to claim 1, wherein the pin member is inserted through the through hole by press fitting.

3. The power transmission chain according to claim 1 or 2, wherein an end of an inner peripheral surface of the through hole is chamfered.

4. The power transmission chain according to claim 1 or 2, wherein the pin member includes a first pin inserted through the through hole, and a second pin inserted through the through hole and having one side surface in contact with one side surface of the first pin, and a crowning in the chain width direction is provided in at least one of one side surface of the first pin and one side surface of the second pin.

5. The power transmission chain according to claim 1 or 2, wherein the pin member includes a first pin inserted through the through hole, and a second pin inserted through the through hole and having one side surface in contact with one side surface of the first pin, and a gap is provided in at least one of between an inner peripheral surface of the through hole of the link plate and the other side surface of the first pin and between an inner peripheral surface of the through hole of the link plate and the other side surface of the second pin.

6. The power transmission chain according to claim 1 or 2, comprising:

the plurality of link plates arranged with the same phase in a chain length direction and placed on one another in the width direction;
the pin members inserted through the plurality of link plates; and
a plurality of pitch portions continuously connected in the chain length direction,

wherein at least one of the plurality of pitch portions is a centrally dense pitch portion where the plurality of link plates are densely arranged in a range around a center in the chain width direction.

7. The power transmission chain according to claim 1 or 2, comprising:

the plurality of link plates arranged with the same phase in a chain length direction and placed on one another in the width direction;
the pin members inserted through the plurality of link plates; and
a plurality of pitch portions continuously connected in the chain length direction,

wherein at least one of the plurality of pitch portions is a centrally concentrated pitch portion where all the link plates that constitute the pitch portion are concentrated in a range around the center in the chain width direction and narrower than the entire chain width.

8. A power transmission device comprising:

a first pulley having a sheave surface of conical shape;
a second pulley having a sheave surface of conical shape; and
a power transmission chain spanning the first and second pulleys,
chain components of the power transmission chain and the sheave surfaces of the first and second pulleys coming into contact with each other to transmit power,
wherein the power transmission chain is a chain according to any of claims 1 to 7.

*FIG. 1*

*FIG. 2*

*FIG. 3*

*FIG. 4*

*FIG. 5*

FIG. 6

FIG. 7

FIG. 8

EP 1 760 361 A1

*FIG. 9*

EP 1 760 361 A1

*FIG. 10*

*FIG. 11*

*FIG. 12*

*FIG. 13*

*FIG. 14*

*FIG. 15*

FIG. 16

*FIG. 17*

FIG. 18

FIG. 19

—20

FIG. 20

20

*FIG. 21*

*FIG. 22*

FIG. 23

## EP 1 760 361 A1

| | INTERNATIONAL SEARCH REPORT | International application No. |
|---|---|---|
| | | PCT/JP2005/008618 |

**A. CLASSIFICATION OF SUBJECT MATTER**
Int.Cl⁷ F16G5/18, F16H9/24

According to International Patent Classification (IPC) or to both national classification and IPC

**B. FIELDS SEARCHED**

Minimum documentation searched (classification system followed by classification symbols)
Int.Cl⁷ F16G5/18, F16H9/24

Documentation searched other than minimum documentation to the extent that such documents are included in the fields searched
Jitsuyo Shinan Koho 1922-1996 Jitsuyo Shinan Toroku Koho 1996-2005
Kokai Jitsuyo Shinan Koho 1971-2005 Toroku Jitsuyo Shinan Koho 1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E,A | JP 2005-214345 A (Koyo Seiko Co., Ltd.),<br>11 August, 2005 (11.08.05),<br>Par. No. [0016]; Figs. 2, 4<br>(Family: none) | 1-8 |
| A | Microfilm of the specification and drawings annexed to the request of Japanese Utility Model Application No. 121694/1987(Laid-open No. 27558/1989)<br>(Daido Kogyo Kabushiki Kaisha),<br>16 February, 1989 (16.02.89),<br>Page 8, lines 14 to 20<br>(Family: none) | 2-8 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 September, 2005 (01.09.05) | 20 September, 2005 (20.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

37

**INTERNATIONAL SEARCH REPORT**

| International application No. |
| --- |
| PCT/JP2005/008618 |

C (Continuation). DOCUMENTS CONSIDERED TO BE RELEVANT

| Category* | Citation of document, with indication, where appropriate, of the relevant passages | Relevant to claim No. |
| --- | --- | --- |
| E,A | JP 2005-121071 A (Koyo Seiko Co., Ltd.),<br>12 May, 2005 (12.05.05),<br>Claim 1; Fig. 3<br>(Family: none) | 4,8 |
| P,A | JP 2005-54940 A (Koyo Seiko Co., Ltd.),<br>03 March, 2005 (03.03.05),<br>Claim 1; Fig. 3<br>(Family: none) | 5,8 |
| P,A | JP 2005-114133 A (Koyo Seiko Co., Ltd.),<br>28 April, 2005 (28.04.05),<br>Claims 1 to 2; Figs. 3, 5<br>(Family: none) | 6-8 |

Form PCT/ISA/210 (continuation of second sheet) (January 2004)

**REFERENCES CITED IN THE DESCRIPTION**

**Patent documents cited in the description**

- JP 6427558 A